# EUROPEAN PATENT APPLICATION

(11) **EP 2 119 924 A1**
(43) Date of publication of application: **18.11.2009**
(21) Application number: 08703185.2
(22) Date of filing: 15.01.2008
(51) Int. Cl.: F16C 33/46, F16C 19/36, F16C 33/66

(54) **CONICAL ROLLER BEARING**

(30) Priority: 15.01.2007 JP 2007005764
(71) Applicant: JTEKT Corporation, Osaka-shi Osaka 542-8502 (JP)
(72) Inventor: MATSUYAMA, Hiroki, Osaka-shi Osaka 542-8502 (JP); TODA, Kazutoshi, Osaka-shi Osaka 542-8502 (JP)
(74) Representative: HOFFMANN EITLE
(86) International application number: PCT/JP2008/050321
(87) International publication number: WO 2008/087926

(57) **Abstract**

A tapered roller bearing includes a cage 5 composed of a first annular portion 20, a second annular portion 21 positioned on a larger-diameter side of a tapered raceway surface 12 of an inner ring 2 in an axial direction, and pillar portions that couple the first annular portion 20 and the second annular portion 21 to each other. A tapered roller contact members 6 which has a portion in contact with a second end face 31, i.e., a larger-diameter end face of the tapered roller 3 and which is made from a material having lubricating oil-permeating property is fixed to an outer circumferential surface of the second annular portion 21 so as to provide a clearance to an inner circumferential surface of an outer ring 1.

## Description

### TECHNICAL FIELD

The present invention relates to tapered roller bearings. In particular, the invention relates to a tapered roller bearing which is preferably used for rotatably supporting a pinion shaft in a vehicle-use pinion shaft supporting device having the pinion shaft, such as differential gear devices, transaxle devices or transfer devices.

### BACKGROUND ART

Conventionally, there is provided a tapered roller bearing described in JP 11-48805 A (Patent Literature 1). This tapered roller bearing has an inner ring, an outer ring and tapered rollers. The inner ring has, on a larger-diameter side of its tapered raceway surface, a larger flange portion put into contact with larger-diameter end faces of the tapered rollers. An inner circumferential surface of the inner ring is fixed to the pinion shaft of the differential gear device, while an outer circumferential surface of the outer ring is fixed to an annular partition wall within the differential gear device.

In this tapered roller bearing, oil that has flowed up from a ring gear side of the differential gear device via an oil passage is made to flow, between the inner circumferential surface of the outer ring and the outer circumferential surface of the inner ring, from an opening of a smaller-diameter side of the tapered raceway surface of the inner ring to an opening of a larger-diameter side of the tapered raceway surface of the inner ring, so that the outer ring, the inner ring and the tapered rollers are prevented from occurrence of seizures.

In such a background, for such oil lubrication type tapered roller bearings as described above, there is a demand for largely reducing oil stirring resistance to achieve a large reduction of torque. However, when the quantity of oil flowing in the tapered roller bearing is limited to an extremely small quantity to largely reduce the oil stirring resistance, which is a major factor of torque, with a view to achieving a large reduction of torque, it may occur that oil does not spread enough to sliding portions between the larger flange portion of the inner ring and the larger-diameter end faces of the tapered rollers, causing less lubrication of those sliding portions.

Meanwhile, when enough quantity of oil to well lubricate the sliding portions is fed into the tapered roller bearing, there would be torque increases due to the oil stirring resistance, making it impossible to achieve a large reduction of torque.

PATENT LITERATURE 1: JP 11-48805 A (Fig. 1)

### SUMMARY OF INVENTION

### TECHNICAL PROBLEM

Accordingly, an object of the present invention is to provide a tapered roller bearing which allows sliding portions between the larger flange portion of the inner ring and the tapered rollers to be lubricated with no problem and which, at the same time, allows a large reduction of torque to be achieved.

### SOLUTION TO PROBLEM

In order to achieve the above object, according to the present invention, there is provided a tapered roller bearing comprising:
an inner ring having a tapered raceway surface and a larger flange portion positioned on a larger-diameter side of the tapered raceway surface;
an outer ring having a tapered raceway surface;
a plurality of tapered rollers each of which has a first end face, and a second end face positioned on a larger-diameter side of the tapered raceway surface of the inner ring further than the first end face in an axial direction of the inner ring, and which are positioned between the tapered raceway surface of the inner ring and the tapered raceway surface of the outer ring;
a cage composed of a first annular portion, a second annular portion positioned on the larger-diameter side of the tapered raceway surface of the inner ring further than the first annular portion in the axial direction, and pillar portions which couple the first annular portion and the second annular portion to each other; and
a tapered roller contact member which is fixed to a circumferential surface of the second annular portion so as to provide a clearance to an inner circumferential surface of the outer ring, and which has a portion in contact with the second end face of the tapered roller, and moreover which is made from a material having lubricating oil-permeating property.

The present inventors have verified that when a tapered roller bearing (having no tapered roller contact member) is installed in an environment in which lubricating oil flows from an opening of a smaller-diameter side of an inner ring to an opening of a larger-diameter side of the inner ring between the outer ring and the inner ring, a flow rate of lubricating oil that flows in at an inlet-side opening from radial inward of a cage and flows out at an outlet-side opening from radial outward of the cage, although varying depending on specifications, is about 75% of a total quantity. It has also been verified that a flow rate of the lubricant that flows in at the inlet-side opening from radial inward of the cage and flows out at the outlet-side opening from radial inward of the cage is about 12.5% of a total quantity, and that a flow rate of the lubricant that flows in at the inlet-side opening from radial outward of the cage and flows out at the outlet-side opening from radial outward of the cage is about 12.5% of a total quantity.

Then, the inventors have found that in order to suppress to the utmost the lubricating-oil stirring resistance that could cause torque increases and, at the same time, to prevent occurrence of seizures on the tapered roller guide surface of the larger flange portion that is most liable to occurrence of seizures, it is effective that the quantity of lubricating oil within the tapered roller bearing is decreased to a lower level without causing any disturbance for lubricating oil which flows out at the outlet-side opening from radial outward of the cage and which occupies about 87.5% (75% + 12.5%) of a total flow quantity, while part of the lubricating oil which flows out in a larger quantity from radial outward of the cage is fed to a second end face of a tapered roller (one of two end faces of the tapered roller positioned on the larger-diameter side of the tapered raceway surface of the inner ring). In addition, as a matter of course, part of the lubricating oil that flows out from radial inward of the cage may be fed to the second end face of the tapered roller.

According to this invention, since the tapered roller bearing includes the tapered roller contact member which is fixed to the circumferential surface of the second annular portion so as to provide the clearance to the inner circumferential surface of the outer ring and which has the portion in contact with the second end face of the tapered roller and moreover which is made from the material having oil-permeating property, lubricating oil is allowed to flow out of the bearing from between the tapered roller contact member and the outer ring, while the lubricating oil that has permeated into the tapered roller contact member can be fed to the second end face of the tapered roller. As a result of this, the quantity of lubricating oil that reaches the tapered roller guide surface of the larger flange portion of the inner ring can be increased. Thus, the lubricating-oil stirring resistance that could cause torque increases can be suppressed, while occurrence of seizures on the tapered roller guide surface of the larger flange portion of the inner ring can be suppressed.

In one embodiment, the tapered roller contact member is present only at positions where the tapered roller contact member roughly overlaps in the axial direction with the plurality of tapered rollers, and
at every position where the tapered roller contact member is present in a circumferential direction of the second annular portion, an axially inner end face of the tapered roller contact member is positioned axially inner than an axially inner end face of the second annular portion.

According to the embodiment, since the tapered roller contact member is present only at such positions as to roughly overlap in the axial direction with the plurality of tapered rollers and roughly absent at such positions as not to overlap in the axial direction with a plurality of tapered rollers, it becomes achievable to cut down the material cost of the tapered roller contact member, and moreover disturbance in outflow of the lubricating oil is roughly avoided at positions where the tapered roller contact member roughly does not overlap in the axial direction with the plurality of tapered rollers. Thus, the oil stirring resistance can be reduced.

Also, according to the embodiment, since the axially inner end face of the tapered roller contact member is positioned axially inner than the axially inner end face of the second annular portion at every position where the tapered roller contact member is present in the circumferential direction of the second annular portion, the lubricating oil can efficiently be fed to the second end face of the tapered roller, so that seizures of the larger flange portion of the inner ring can efficiently be suppressed.

In one embodiment, the tapered roller contact member is an annular member, and over an entire circumference of the circumferential direction of the second annular portion, an axially inner end face of the tapered roller contact member is positioned axially inner than an axially inner end face of the second annular portion.

According to the embodiment, since the tapered roller contact member is the annular member, a large quantity of lubricating oil can be received without being prevented by the tapered rollers at portions of the tapered roller contact member other than those at positions where the tapered roller contact member overlaps in the axial direction with the plurality of tapered rollers. Moreover, since the axially inner end face of the tapered roller contact member is positioned axially inner than the axially inner end face of the second annular portion over the entire circumference of the circumferential direction of the second annular portion while the portions of the tapered roller contact member axially overlapping with the tapered roller are in contact with the tapered roller, lubricating oil can be conducted smoothly to the second end face of the tapered roller from portions of the tapered roller contact member other than its axially overlapping positions via positions where the tapered roller contact member axially overlaps with the plurality of tapered rollers. Thus, a further suppression of seizures on the tapered roller guide surface of the larger flange portion can be achieved.

### ADVANTAGEOUS EFFECTS OF INVENTION

According to this invention, since the tapered roller bearing includes the tapered roller contact member which is fixed to the circumferential surface of the second annular portion so as to provide a clearance to the inner circumferential surface of the outer ring and which has a portion in contact with the second end face of the tapered roller and moreover which is made from a material having oil-permeating property, lubricating oil is allowed to flow out of the bearing from between the tapered roller contact member and the outer ring, while the lubricating oil that has permeated into the tapered roller contact member can be fed to the second end face of the tapered roller and, therefore, the quantity of lubricating oil that reaches the tapered roller guide surface of the larger flange portion of the inner ring can be increased. Thus, the lubricating-oil stirring resistance that could cause torque increases can be suppressed, while occurrence of seizures on the tapered roller guide surface of the larger flange portion of the inner ring can be suppressed.

### BRIEF DESCRIPTION OF DRAWINGS

Fig. 1 is an axial sectional view of a tapered roller bearing according to a first embodiment of the invention;
Fig. 2 is an enlarged sectional view of a vicinity of a second annular portion in Fig. 1;
Fig. 3 is a view of the tapered roller bearing of the first embodiment as viewed from axial outward of a larger-diameter side end face of a tapered raceway surface of an inner ring;
Fig. 4 is a view of a tapered roller bearing of a second embodiment as viewed from axial outward of a larger-diameter side end face of a tapered raceway surface of an inner ring;
Fig. 5 is a view of a modification of the invention corresponding to Fig. 3 in a case where a tapered roller contact member is fixed to an outer circumferential surface of a second annular portion of a cage;
Fig. 6 is an axial sectional view of a tapered roller bearing according to a third embodiment of the invention;
Fig. 7 is a view of the tapered roller bearing of the third embodiment as viewed from axial outward of a larger-diameter side end face of a tapered raceway surface of an inner ring;
Fig. 8 is a view of a modification of the invention corresponding to Fig. 7 in a case where a tapered roller contact member is fixed to an inner circumferential surface of a second annular portion of a cage.

### REFERENCE SIGNS LIST

1 outer ring
2 inner ring
3, 203, 403 tapered roller
5 cage
6, 106, 306 tapered roller contact member
11 tapered raceway surface of outer ring
12 tapered raceway surface of inner ring
13 smaller flange portion
14 larger flange portion
20 first annular portion
21 second annular portion
30 first end face
31, 231, 431 second end face
206 portion of tapered roller contact member in contact with each tapered roller
406 portion of tapered roller contact member in contact with each tapered roller

### DESCRIPTION OF EMBODIMENTS

Hereinbelow, the present invention will be described in detail by embodiments thereof illustrated in the accompanying drawings.

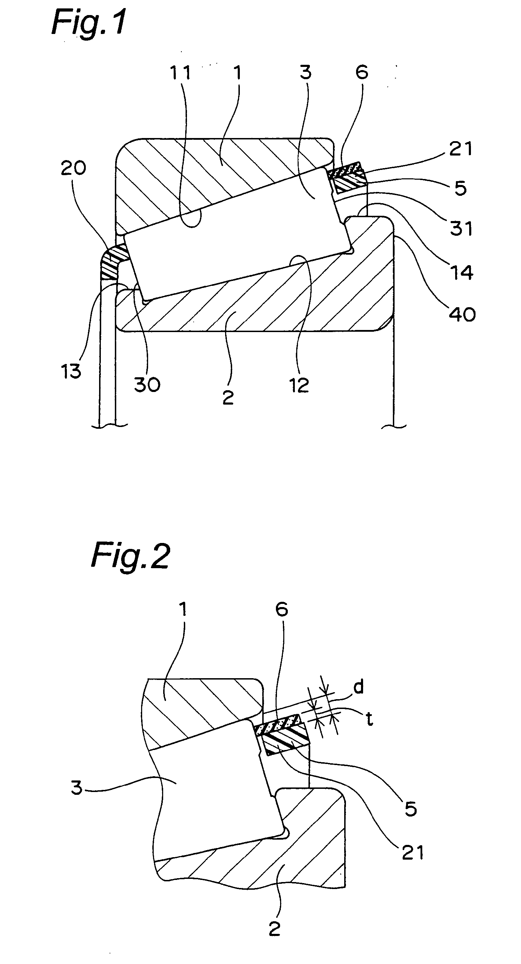

Fig. 1 is an axial sectional view of a tapered roller bearing according to a first embodiment of the invention.

With this tapered roller bearing, a pinion shaft of a vehicle-use pinion shaft supporting device under a lubricating condition requiring use of a large quantity of relatively high-viscosity oil, such as differential gear device, transaxle device or transfer device, is supported so as to be rotatable relative to a housing of the vehicle-use pinion shaft supporting device.

The tapered roller bearing includes an outer ring 1, an inner ring 2, a plurality of tapered rollers 3, a cage 5, and a tapered roller contact member 6.

The outer ring 1 has a tapered raceway surface 11, while the inner ring 2 has a tapered raceway surface 12, a smaller flange portion 13 positioned on a smaller-diameter side of the tapered raceway surface 12, and a larger flange portion 14 positioned on a larger-diameter side of the tapered raceway surface 12. Gear oil in the vehicle-use pinion shaft supporting device as an example of lubricating oil flows from an opening of a smaller-diameter side of the tapered raceway surface 12 of the inner ring 2 to an opening of a larger-diameter side of the tapered raceway surface 12 of the inner ring 2 between the outer ring 1 and the inner ring 2.

Each of the tapered rollers 3 has a first end face 30 and a second end face 31. The second end face 31 is positioned on the larger-diameter side of the tapered raceway surface 12 of the inner ring 2 further than the first end face 30 in an axial direction (more precisely, in the axial direction of the inner ring 2). Each of the first end face 30 and the second end face 31 has a circular shape. A diameter of the second end face 31 is larger than a diameter of the first end face 30. The plurality of tapered rollers 3 are arranged between the tapered raceway surface 11 of the outer ring 1 and the tapered raceway surface 12 of the inner ring 2 so as to be circumferentially spaced from one another in a state that the tapered rollers 3 are held by the cage 5.

The cage 5 is composed of a first annular portion 20, a second annular portion 21, and a plurality of pillar portions (not shown). The second annular portion 21 is positioned on the larger-diameter side of the tapered raceway surface 12 of the inner ring 2 further than the first annular portion 20 in the axial direction. Each of the pillar portions couples the first annular portion 20 and the second annular portion 21 to each other. The plurality of pillar portions are arranged so as to be spaced from one another in the circumferential direction of the first annular portion 20. A portion surrounded by the first annular portion 20, the second annular portion 21 and circumferentially neighboring two pillar portions serves as a pocket in which a tapered roller 3 is housed.

The tapered roller contact member 6 is made from felt, which is an example of materials having lubricating-oil permeability. The tapered roller contact member 6 is fixed to the outer circumferential surface of the second annular portion 21 of the cage 5 by adhesive with a clearance provided to the inner circumferential surface of the outer ring 1. As shown in Fig. 1, an axially inner end face of the tapered roller contact member 6 is positioned axially inner than an axially inner end face of the second annular portion 21. An axially inner end portion of the tapered roller contact member 6 is in contact with the second end face (larger-diameter end face) 31 of the tapered roller 3.

Fig. 2 is an enlarged sectional view of a vicinity of the second annular portion 21 in Fig. 1.

Given a thickness t (mm) of the tapered roller contact member 6 and a distance (more precisely, minimum distance) d (mm) between the second annular portion 21 and the inner circumferential surface of the outer ring 1, it holds that t ≤ d/2.

With such an arrangement as described above, gear oil that has reached a larger-diameter side end portion of the tapered raceway surface 11 in the inner circumferential surface of the outer ring 1 along the inner circumferential surface of the outer ring 1 by pumping action is allowed to flow out of the bearing without being prevented by the tapered roller contact member 6, so that a reduction of gear-oil stirring resistance can be achieved.

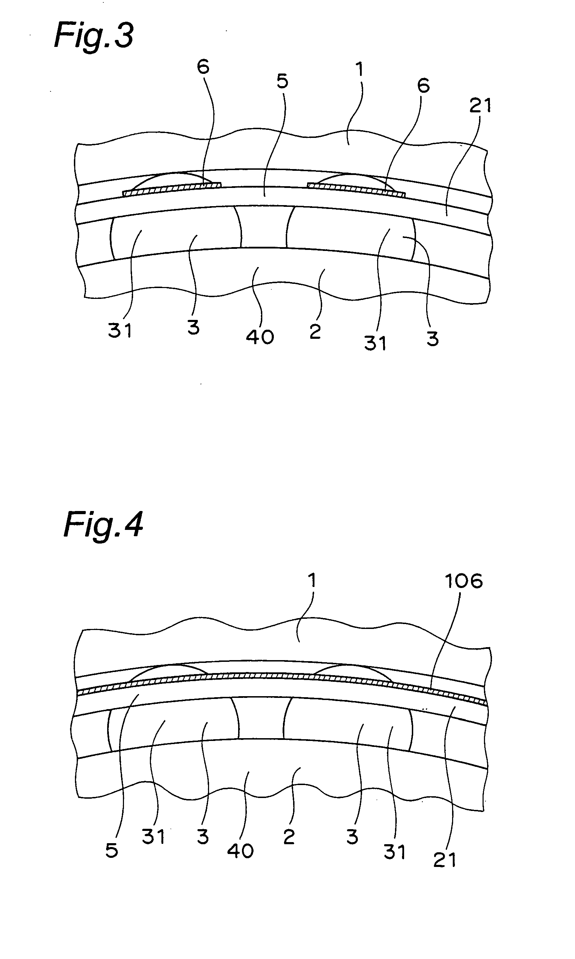

Fig. 3 is a view of the tapered roller bearing of the first embodiment as viewed from axial outward of an end face 40 of a larger-diameter side (see Fig. 1) of the tapered raceway surface 12 of the inner ring 2.

As shown in Fig. 3, the tapered roller contact member 6 is composed of a plurality of portions placed with specified intervals in the circumferential direction. The tapered roller contact member 6 is present only at such positions as to generally overlap with the plurality of tapered rollers 3 in the axial direction.

More precisely, the tapered roller contact member 6 is present only at portions in the circumferential direction of the second annular portion 21 facing the pockets. That is, assuming that circumferentially neighboring pillar portions are a first pillar portion and a second pillar portion, the tapered roller contact member 6 is present over a range from a second pillar portion-side edge of the first pillar portion to a first pillar portion-side edge of the second pillar portion in the second annular portion 21 along the circumferential direction.

In every portion in the circumferential direction where the tapered roller contact member 6 is present, the tapered roller contact member 6 has a portion positioned axially inner than the axially inner end face of the second annular portion 21. A tapered roller 3 side end face of the tapered roller contact member 6 in a portion over which the tapered roller contact members 6 overlaps with the tapered roller 3 in the axial direction is in contact with the tapered roller 3.

According to the tapered roller bearing of the first embodiment, the tapered roller bearing has a portion which is fixed to the outer circumferential surface of the second annular portion 21 in contact with the second end face 31 of the tapered roller 3 so that gear oil as lubricating oil is allowed to flow out of the bearing from between the tapered roller contact member 6 and the inner circumferential surface of the outer ring 1 while a clearance is provided to the inner circumferential surface of the outer ring 1, and moreover the tapered roller bearing further includes the tapered roller contact member 6 made from felt having oil-permeating property. Therefore, the gear oil that has permeated into the tapered roller contact member 6 can be fed to the second end face 31 of the tapered rollers 3. Thus, by rotation and revolution of the tapered rollers 3, the gear oil can be conducted along the tapered roller guide surface of the larger flange portion 14 of the inner ring 2, so that the quantity of the gear oil that reaches the tapered roller guide surface of the larger flange portion 14 of the inner ring 2 can be increased effectively. Accordingly, since the larger flange portion can reliably be lubricated even with less quantities of gear oil, gear-oil stirring resistance due to large quantities of gear oil can be suppressed, and moreover occurrence of seizures on the tapered roller guide surface of the larger flange portion 14 of the inner ring 2 can be suppressed.

Also, according to the tapered roller bearing of the first embodiment, the tapered roller contact member 6 is generally absent at positions where the tapered roller contact member 6 does not overlap in the axial direction with a plurality of tapered rollers 3, and the tapered roller contact member 6 is generally absent at positions where the gear oil as lubricating oil is allowed to flow out of the bearing without being disturbed by the tapered rollers 3, i.e., positions where the tapered roller contact member 6 does not overlap in the axial direction with a plurality of tapered rollers 3. Thus, at positions where the tapered roller contact member 6 does not overlap in the axial direction with the tapered rollers 3, the gear oil is allowed to efficiently flow out of the bearing generally without being prevented by the tapered roller contact member 6. Therefore, oil stirring resistance can be reduced, allowing a large reduction of torque to be achieved. Moreover, the material cost of the tapered roller contact member 6 can be cut down.

Also, according to the tapered roller bearing of the first embodiment, the tapered roller contact member 6 is present only at positions where the tapered roller contact member 6 roughly overlaps in the axial direction with a plurality of tapered rollers 3, and the axially inner end face of the tapered roller contact member 6 is positioned axially inner than the axially inner end face of the second annular portion 21 for every position where the tapered roller contact member 6 is present in the circumferential direction of the second annular portion 21. Therefore, gear oil can efficiently be fed to the second end face 31 of the tapered roller 3, so that seizures of the larger flange portion of the inner ring 2 can efficiently be suppressed.

In addition, although the material of the tapered roller contact member 6 is felt in the tapered roller bearing of the first embodiment, the invention allows any material to be used as the material of the tapered roller contact member as far as the material has oil-permeating property, such as cotton and sponge. Also, as the material of the tapered roller contact member, a material that can be impregnated with oil and that allows oil to be oozed by contact is particularly preferably.

Fig. 4 is a view of a tapered roller bearing according to a second embodiment, as viewed from axial outward of a larger-diameter side end face 40 of the tapered raceway surface of the inner ring 2, corresponding to Fig. 3 of the tapered roller bearing of the first embodiment.

In the tapered roller bearing of the second embodiment, its component members similar to those of the tapered roller bearing of the first embodiment are designated by like reference signs and their description is omitted. Also, in the tapered roller bearing of the second embodiment, descriptions of functional effects and modifications common to the tapered roller bearing of the first embodiment are omitted, and their component members and functional effects different from those of the tapered roller bearing of the first embodiment only will be described.

In the second embodiment, a tapered roller contact member 106 made from felt is an annular member, which is fixed to an outer circumferential surface of the second annular portion 21 over an entire circumference of the second annular portion 21. An axially inner end face of the tapered roller contact member 106 is positioned axially inner than an axially inner end face of the second annular portion 21 over the entire circumference. In the axial direction, a tapered roller 3 side end face of the tapered roller contact member 6 overlapping with the tapered rollers 3 is in contact with the second end face 31 of the tapered roller 3.

According to the tapered roller bearing of the second embodiment, since the tapered roller contact member 106 is an annular member, large quantities of lubricating oil can be received without being prevented by the tapered rollers 3 at portions of the tapered roller contact member 106 other than its positions where the tapered roller contact member 106 overlaps in the axial direction with a plurality of tapered rollers 3. Also, since the axially inner end face of the tapered roller contact member 106 is positioned axially inner than the axially inner end face of the second annular portion 21 over the entire circumference of the second annular portion 21 and the portions of the tapered roller contact member 106 overlapping in the axial direction with the tapered rollers 3 are in contact with the tapered rollers 3, lubricating oil can be conducted to the second end face 31 of the tapered rollers 3 effectively and smoothly from portions of the tapered roller contact member 106 other than its axially overlapping portions, via the positions where the tapered roller contact member 106 overlaps with a plurality of tapered rollers 3. Accordingly, seizures on the tapered roller guide surface of the larger flange portion of the inner ring 2 can be suppressed with more reliability. Also, since the tapered roller contact member 106 is an annular integrated member, its easier assembling and stronger adhesion with the cage can be obtained.

It is needless to say that the position where the tapered roller contact member is present in the circumferential direction is not limited to those described in the first and second embodiments. For example, the position where the tapered roller contact member is present may be an entirety of the second annular portion in its circumferential direction except its portion overlapping in the axial direction with one pillar portion. In this case, the tapered roller contact member can be fitted promptly and easily to the second annular portion so as to be wound around the second annular portion.

Also, a tapered roller contact member in contact with only part of a plurality of tapered rollers may be fixed to the outer circumferential surface of the cage. More specifically, given a count N (where N is a natural number) of the tapered rollers included in the tapered roller bearing, a tapered roller contact member composed of M portions that are in contact with only M tapered rollers, satisfying that N > M (M is a natural number), may be fixed to the outer circumferential surface of the cage.

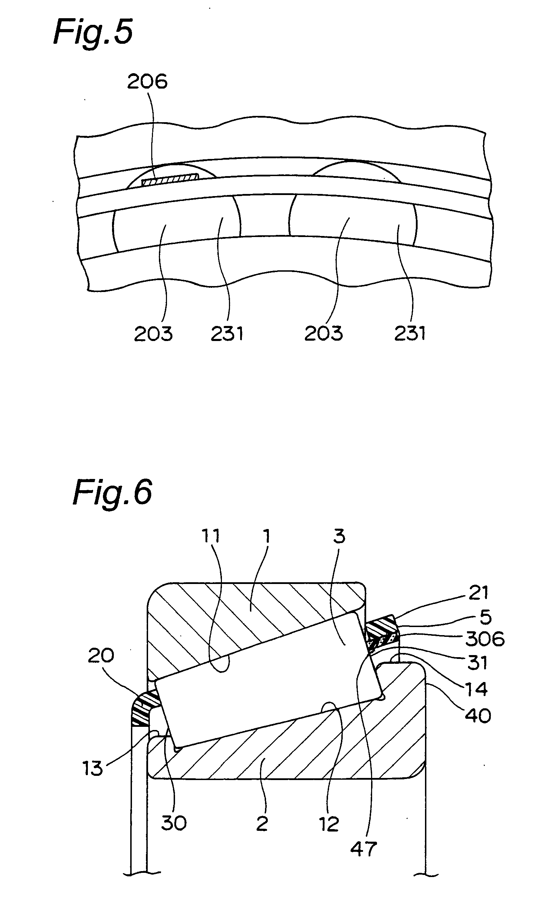

Also, in this case, with regard to the portion of the tapered roller contact member in contact with each tapered roller, a portion smaller than the entirety of the axially inner end face of the tapered roller contact member may be in contact with the second end face of the tapered roller as shown in Fig. 3. Furthermore, as shown in Fig. 5, with regard to a portion 206 of the tapered roller contact member in contact with each tapered roller 203, the entirety of the axially inner end face of the portion 206 of the tapered roller contact member may be in contact with a second end face 231 of the tapered roller 203.

Thus, the tapered roller contact member may be fixed to any position on the outer circumferential surface of the second annular portion only if the tapered roller contact member has a portion in contact with the end face of the tapered roller.

Further, only if the tapered roller contact member has a portion in contact with the end face of the tapered roller, the tapered roller contact member does not need to be fixed to the outer circumferential surface of the second annular portion and may be fixed to an inner circumferential surface of the second annular portion.

Fig. 6 is an axial sectional view of a tapered roller bearing according to a third embodiment of the invention. The tapered roller bearing of the third embodiment differs from the tapered roller bearing of the first embodiment only in that a tapered roller contact member 306 is not fixed to the outer circumferential surface of the second annular portion 21 of the cage 5, but fixed to an inner circumferential surface 47 of the second annular portion 21 of the cage 5.

In the tapered roller bearing of the third embodiment, its component members similar to those of the tapered roller bearing of the first embodiment are designated by like reference signs and their description is omitted. Also, in the tapered roller bearing of the third embodiment, description of functional effects and modifications common to the tapered roller bearing of the first embodiment as well as functional effects and modifications common to the tapered roller bearing of the second embodiment is omitted, and only component members, functional effects and modifications different from those of the tapered roller bearings of the first and second embodiments will be described.

The tapered roller contact member 306 of the tapered roller bearing of the third embodiment is made from felt, which is an example of materials having lubricating-oil permeability.

As shown in Fig. 6, the tapered roller contact member 306 is fixed to the inner circumferential surface 47 of the second annular portion 21 of the cage 5 by adhesive. An axially inner end face of the tapered roller contact member 306 is positioned axially inner than the axially inner end face of the second annular portion 21. An axially inner end portion of the tapered roller contact member 306 is in contact with the second end face (larger-diameter end face) 31 of the tapered roller 3.

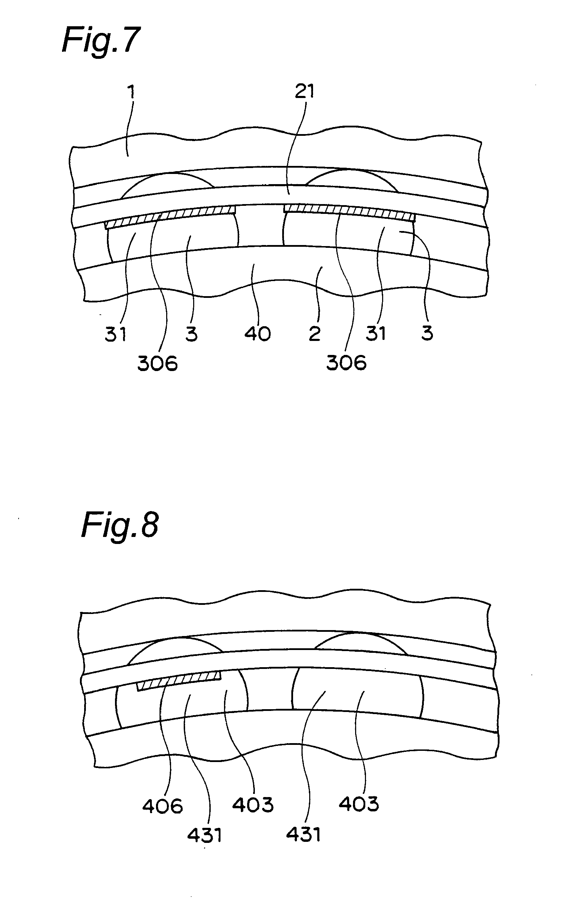

Fig. 7 is a view of the tapered roller bearing of the third embodiment, as viewed from axial outward of the larger-diameter side end face 40 (see Fig. 6) of the tapered raceway surface 12 of the inner ring 2.

As shown in Fig. 7, the tapered roller contact member 306 is composed of a plurality of portions arranged with specified intervals in the circumferential direction. The tapered roller contact member 306 is present only at such positions as to roughly overlap in the axial direction with a plurality of tapered rollers 3.

More precisely, the tapered roller contact member 306 is present only at portions of the second annular portion 21 facing the pockets in the circumferential direction. That is, assuming that circumferentially neighboring pillar portions are a first pillar portion and a second pillar portion, the tapered roller contact member 306 is present over a range from a second pillar portion-side edge of the first pillar portion to a first pillar portion-side edge of the second pillar portion in the second annular portion 21 along the circumferential direction.

In every portion in the circumferential direction where the tapered roller contact member 306 is present, the tapered roller contact member 306 has a portion positioned axially inner than the axially inner end face of the second annular portion 21. A tapered roller 3 side end face of the tapered roller contact member 306 which overlaps with the tapered roller 3 in the axial direction is in contact with the tapered roller 3.

In some cases depending on specifications, a contact area between the tapered roller contact member and the second end face of the tapered roller can be made larger, allowing larger quantities of lubricating oil to be fed to the second end face of the tapered roller, when the tapered roller contact member is fixed to the inner circumferential surface of the second annular portion of the cage, rather than when the tapered roller contact member is fixed to the outer circumferential surface of the second annular portion of the cage.

Also, in some cases depending on specifications, a distance from a lubricating-oil feeding area of the second end face of the tapered roller by the tapered roller contact member to a tapered roller guide surface of the larger flange portion of the inner ring can be made shorter, helping to suppress seizures on the tapered roller guide surface that is more liable to seizures, when the tapered roller contact member is fixed to the inner circumferential surface of the second annular portion of the cage, rather than when the tapered roller contact member is fixed to the outer circumferential surface of the second annular portion of the cage.

According to the tapered roller bearing of the third embodiment, since the tapered roller contact member is fixed to the inner circumferential surface of the second annular portion of the cage, the seizure suppressing effect of the tapered roller bearing can be increased in such cases as described above.

In the tapered roller bearing of the third embodiment, by the tapered roller contact member 306, lubricating oil is fed from the inner circumferential surface side of the second annular portion 21 of the cage 5 to the second end face 31 of every tapered roller 3. However, in the present invention, by the tapered roller contact member, lubricating oil may be fed from the inner circumferential surface side of the second annular portion of the cage to only part of a plurality of tapered rollers, i.e., to only M tapered rollers (where M is a natural number), given a count N (where N is a natural number) of tapered rollers included in the tapered roller bearing, satisfying a condition that N > M.

Also, in this case, with regard to the portion of the tapered roller contact member in contact with each tapered roller, a portion of the tapered roller contact member smaller than an entirety of the axially inner end face of each tapered roller contact member may be in contact with the second end face of the tapered roller as shown in Fig. 7. Moreover, with regard to a portion 406 of the tapered roller contact member in contact with each tapered roller 403, the entirety of the axially inner end face of the portion 406 of each tapered roller contact member may be in contact with a second end face 431 of the tapered roller 403 as shown in Fig. 8.

Further, on the inner circumferential surface of the second annular portion of the cage, a tapered roller contact member may be fixed over the entire circumference of the inner circumferential surface.

In addition, the tapered roller contact member may be provided so as to have a portion fitted to the outer circumferential surface of the second annular portion and a portion fitted to the inner circumferential surface of the second annular portion.

The tapered roller contact member may be fixed at any position on either the outer circumferential surface or the inner circumferential surface of the second annular portion only if the tapered roller contact member has a portion in contact with the second end face of the tapered roller.

## Claims

1. A tapered roller bearing comprising:
an inner ring having a tapered raceway surface and a larger flange portion positioned on a larger-diameter side of the tapered raceway surface;
an outer ring having a tapered raceway surface;
a plurality of tapered rollers each of which has a first end face, and a second end face positioned on a larger-diameter side of the tapered raceway surface of the inner ring further than the first end face in an axial direction of the inner ring, and which are positioned between the tapered raceway surface of the inner ring and the tapered raceway surface of the outer ring;
a cage composed of a first annular portion, a second annular portion positioned on the larger-diameter side of the tapered raceway surface of the inner ring further than the first annular portion in the axial direction, and pillar portions which couple the first annular portion and the second annular portion to each other; and
a tapered roller contact member which is fixed to a circumferential surface of the second annular portion so as to provide a clearance to an inner circumferential surface of the outer ring, and which has a portion in contact with the second end face of the tapered roller, and moreover which is made from a material having lubricating oil-permeating property.

2. The tapered roller bearing as claimed in Claim 1, wherein
the tapered roller contact member is present only at positions where the tapered roller contact member roughly overlaps in the axial direction with the plurality of tapered rollers, and
at every position where the tapered roller contact member is present in a circumferential direction of the second annular portion, an axially inner end face of the tapered roller contact member is positioned axially inner than an axially inner end face of the second annular portion.

3. The tapered roller bearing as claimed in Claim 1, wherein
the tapered roller contact member is an annular member, and
over an entire circumference of the circumferential direction of the second annular portion, an axially inner end face of the tapered roller contact member is positioned axially inner than an axially inner end face of the second annular portion.
